# DEMANDE DE BREVET EUROPEEN

(11) **EP 0 829 506 A1**
(43) Date de publication de la demande: **18.03.1998**
(21) Numéro de dépôt: 97401948.1
(22) Date de dépôt: 19.08.1997
(51) Int. Cl.: C08J 5/18, C08L 75/04, C08L 77/00

(54) **Film et objet obtenus à partir d'un matériau comprenant un polyuréthane et un polymère à blocs polyamide et polyéther**

(30) Priorité: 23.08.1996 FR 9610464
(71) Demandeur: ELF ATOCHEM S.A., 92800 Puteaux (FR)
(72) Inventeur: Alex, Patrick, 91470 Limours Pecqueuse (FR); Piard, André, 27300 Bernay (FR); de Jong, Eduard, 53844 Troisdorf (DE)
(74) Mandataire: Pochart, François

(57) **Abrégé**

La présente invention concerne des film et objet obtenus à partir d'un matériau comprenant un polyuréthanne et un polymère à blocs polyamide et polyéther, l'utilisation de celui-ci pour la fabrication desdits film et objet. Le film selon l'invention est imperrespirant, tandis que l'objet selon l'invention est antistatique.

## Description

La présente invention concerne des film et objet obtenus à partir d'un matériau comprenant un polyuréthanne et un polymère à blocs polyamide et polyéther, l'utilisation de ce dernier pour la fabrication desdits film et objet. Le film selon l'invention est imperrespirant, tandis que l'objet selon l'invention est antistatique.

La demande EP-A-0 476 963 décrit des films perméables à la vapeur d'eau à base de polymère à blocs polyamide et blocs polyéthylèneglycol, mélangé avec (a) un polymère blocs sans bloc polyéthylèneglycol, (b) un polyamide, (c) un polyester ou (d) un polyuréthanne. Dans tous les exemples d'une part seul un polyamide est donné en exemple, et d'autre part la quantité de polymère à blocs polyamide et blocs polyéthylèneglycol est importante, 75 ou 50% en poids. Les exemples de cette demande indiquent que la perméabilité à la vapeur d'eau est, pour cette quantité de 50% en poids de polymère à blocs polyamide et blocs polyéthylèneglycol, deux fois plus faible que pour la quantité de 75% en poids.

La demande EP-A-0 442 786 décrit un procédé de transformation par extrusion de polyuréthannes thermoplastiques dans lequel on ajoute de 5 à 45% en poids de polyétheramides séquences, par exemple un polymère à blocs polyamide et blocs polyéther. Dans les exemples de cette demande de brevet le polymère à blocs polyamide et blocs polyéther comprend, en tant que blocs polyamide, des blocs PA12 et en tant que blocs polyéther des blocs PEG ou PTMG. Dans cette demande EP-A-0 442 786 il n'y a aucune mention des propriétés des films susceptibles d'être obtenus selon cette demande, notamment en ce qui concerne la perméabilité et/ou l'imperméabilité aux gaz (par ex. la vapeur d'eau) ou aux liquides (par ex. l'eau). Il n'y a par ailleurs aucune mention des propriétés antistatiques des objets susceptibles d'être obtenus selon cette demande.

La demande EP-A-0 526 858 décrit des films à base de polyuréthanne, comprenant de 5 à 20% en poids de polyétheramide séquencé. L'utilisation finale de ces films est le revêtement de substrats, sur lesquels les films présentent de bonnes propriétés d'adhésion. Dans les exemples de cette demande de brevet le polymère à blocs polyamide et blocs polyéther comprend, en tant que blocs polyamide, des blocs PA12, et en tant que blocs polyéther, des blocs PTMG. Dans cette demande EP-A-0 526 858 il n'y a de la même façon aucune mention des propriétés des films en ce qui concerne la perméabilité et/ou l'imperméabilité aux gaz (par ex. la vapeur d'eau) ou aux liquides (par ex. l'eau).

Aucun de ces documents n'enseigne ni ne suggère la présente invention.

Selon un premier aspect, l'invention fournit un film imperrespirant ou un objet antistatique obtenu à partir d'un matériau comprenant, en poids, sur la base du poids du matériau :
(a) de 50 à 95 % d'un polyuréthanne thermoplastique; et
(b) de 5 à 50% d'un polymère à blocs polyamide PA11, PA12 ou PA11,12 et blocs polyéther PE.

Selon un second aspect, l'invention fournit l'utilisation, pour la fabrication de film imperrespirant ou pour la fabrication d'objet antistatique, d'un matériau comprenant, en poids, sur la base du poids du matériau : (a) de 50 à 95 % d'un polyuréthanne thermoplastique; et (b) de 5 à 50% d'un polymère à blocs polyamide PA11, PA12 ou PA11,12 et blocs polyéther PE.

Selon une première variante, dans le polymère (b), les blocs polyéther PE sont des blocs PEG.

Selon une autre variante, dans le polymère (b), les blocs polyéther PE sont des blocs PTMG.

Selon une autre variante, dans le polymère b),les blocs polyamide sont des blocs PA12.

Selon un premier mode de réalisation, le polyuréthanne thermoplastique est un polyétheruréthanne.

Selon un second mode de réalisation, le polyuréthanne est un polyesteruréthanne.

Selon encore un autre mode de réalisation, ledit matériau comprend, en poids, sur la base du poids du matériau :
(a) de 90 à 65% d'un polyuréthanne thermoplastique; et
(b) de 10 à 35% d'un polymère à blocs polyamide PA11, PA12 ou PA11,12 et blocs polyéther PE.

Selon l'invention, la matériau peut être associé avec un tiers polymère, jusqu'à 100%, de préférence jusque 50%, dudit tiers polymère, exprimé en % en poids sur la base du poids du matériau.

L'invention est maintenant décrite plus en détail dans la description qui suit.

Le terme "polyuréthanne thermoplastique" (ci-après TPU) est utilisé dans le sens classique pour l'homme du métier.

Ces TPU sont des copolymères à base polyuréthanne qui peuvent être obtenus par réaction conjointe d'un polymèrediol (avec un poids moléculaire par exemple compris entre 1000 et 3500) et éventuellement un diol (ou allongeur de chaîne de faible poids moléculaire, généralement inférieur à 300) sur un diisocyanate. La synthèse peut avoir lieu en une ou deux étapes. Les segments souples et durs de l'élastomère sont apportés respectivement par le polymèrediol, qui représente les blocs du polymère thermoplastique, et par l'allongeur de chaîne. Les segments durs s'associent par liaison hydrogène et les groupes diisocyanate de chaînes voisines s'associent entre eux pour former un réseau cristallin dans une chaîne souple; on obtient ainsi l'équivalent d'un thermoplastique partiellement cristallisé.

Parmi les TPU, on distingue ceux dont les polymèrediols sont de type polyester(glycol) tels que le polyéthylène-adipate, polytétraméthylèneadipate, le poly(E-caprolactone), et ceux dont les polymèrediols sont de type polyéther (glycol), tels que le polypropyléneglycol, le polyoxytétra-méthylèneglycol, le Polyoxypropylènepolyoxyéthylèneglycol

Le polymérediol peut aussi être de nature mixte, i.e. polyétherester.

Le diphénylèneméthanediisocyanate (MDI) est un diisocyanate couramment utilisé, tandis que le 1,4-butanediol est un allongeur de chaîne couramment utilisé.

Des exemples de produits commerciaux sont Elastollan®1185 et 1190 (PU-éther), Elastollan®C85 et C90 (PU-ester) , et Desmopan®588 et 385 (PU-étherester), les polymères de la gamme Elastollan® étant disponibles chez BASF et ceux de la gamme Desmopan® chez Bayer.

Des mélanges de TPU sont aussi envisagés.

Le polymère à blocs polyamide (PA) et blocs polyéther (PE) est le constituant qui confère au matériau selon l'invention ses propriétés intéressantes.

Ces polymères à blocs polyamide et blocs polyéther résultent de la copolycondensation de séquences polyamide à extrémités réactives avec des séquences polyéther à extrémités réactives, telles que, entre autres :
- séquences polyamide à extrémités diamines avec des séquences polyoxyalkylènes à extrémités dicarboxyliques;
- séquences polyamide à extrémités dicarboxyliques avec des séquences polyoxyalkylènes à extrémités diamines obtenues par cyanoéthylation et hydrogénation de séquences polyoxyalkylène alpha-oméga dihydroxylées aliphatiques appelés polyétherdiols;
- séquences polyamide à extrémités diamines avec des séquences polyétherdiols, les produits obtenus étant dans ce cas particulier, des polyétheresteramides (ci-après PEEA).

De tels polymères sont décrits par exemple dans les brevets français 74 18913 et 77 26678, ainsi que dans les brevets suivants : US-P-4 331 786, US-P-4 115 475, US-P-4 195 015, US-P-4 839 441, US-P-4 864 014, US-P-4 230 838 et US-P-4 332 920, dont le contenu est incorporé à la présente description.

Les séquences polyamide à extrémités dicarboxyliques proviennent, par exemple, de la condensation d'acides alpha-oméga aminocarboxyliques, de lactames ou de combinaisons sensiblement stoechiométriques de diacides carboxyliques et de diamines, en présence d'un diacide carboxylique limitateur de chaîne. Les blocs polyamide sont du PA11, du PA12, ou du PA11,12. Avantageusement, les blocs polyamide sont du PA12. Le poids moléculaire moyen Mn des séquences polyamide PA varie de 300 à 15 000 et de préférence de 600 à 5 000.

Le polyéther peut être par exemple un polyéthylène glycol (PEG), un polytétraméthylène glycol (PTMG) ou un polypropylène glycol (PPG) , les deux premiers étant préférés.

Que les blocs polyéther soient dans la chaîne du polymère à blocs polyamide et blocs polyéther sous forme de diols ou de diamines, on les appelle par simplification blocs PEG ou blocs PTMG. Le poids moléculaire moyen Mn des séquences polyéther est compris entre 100 et 6 000 et de préférence entre 300 et 3 000.

Les polymères à blocs polyamide et blocs polyéther peuvent aussi comprendre des motifs répartis de facon aléatoire. Ces polymères peuvent être préparés par la réaction simultanée du polyéther et des précurseurs des blocs polyamide. Par exemple, on peut faire réagir du polyétherdiol, un lactame (ou un alpha-oméga aminoacide correspondant) et un diacide limiteur de chaîne en présence d'un peu d'eau. On obtient un polymère ayant essentiellement des blocs polyéther, des blocs polyamide de longueur très variable, mais aussi les différents réactifs ayant réagi de façon aléatoire qui sont répartis de façon statistique le long de la chaîne polymère.

Ces polymères à blocs polyamide PA et blocs polyéther PE présentent, par exemple, des duretés Shore D pouvant être comprise entre 20 et 75 et avantageusement entre 30 et 70, et une viscosité intrinsèque comprise entre 0,8 et 2,5 mesurée dans le métacrésol à 25°C pour une concentration initiale de 0,8 g/100 ml.

Ces polymères à blocs PA et blocs PE peuvent être formés, en % en poids, de 5 à 85% de PE (et 95 à 15% de PA) et de préférence de 20 à 80% de PE (et 80 à 20% de PA), et plus préférentiellement de 30 à 70% de PE (et 70 à 30% de PA).

De préférence, le polymère à blocs polyamide et blocs polyéther comprend un seul type de bloc polyamide et un seul type de bloc polyéther. On utilise avantageusement des polymères à blocs PA12 et blocs PEG, et des polymères à blocs PA12 et blocs PTMG.

On peut cependant aussi utiliser des mélanges de polymères à blocs polyamide et blocs polyéther.

De tels polymères à blocs polyamide et à blocs polyéther sont commercialisés par la société Elf Atochem sous la dénomination Pebax®.

Ces polymères à blocs PA et blocs PE présentent des caractéristiques de perméabilité à la vapeur d'eau, et sont désignés comme étant "hydrophiles", suivant l'acceptation classique pour l'homme de l'art.

Ces polymères présentent la caractéristique surprenante de conférer aux TPU auxquels ils sont mélangés en des quantités très faibles :
- une propriété d'imperrespirabilité à des films obtenus à partir du matériau selon l'invention; et
- une propriété d'antistaticité aux objets obtenus à partir du matériau selon l'invention.

Ces propriétés sont obtenues alors même que le TPU forme la phase majoritaire, ce qui est surprenant puisqu'il est généralement admis dans l'art que les propriétés, en particulier de perméabilité aux gaz, sont conférées par la phase majoritaire. Ce résultat, surprenant et inattendu, permet donc de mélanger moins de matériau hydrophile tout en obtenant les propriétés voulues, abaissant par là les coûts du matériau final. Par ailleurs, on constate aussi que si la quantité de PEEA augmente (par exemple de 15 à 30%), alors les caractéristiques de perméabilité et d'antistatisme augmentent aussi. Ce résultat est aussi surprenant, car l'homme de l'art s'attend à ce que, dans la mesure où la matrice est toujours un TPU, les propriétés soient sensiblement constantes sur tout le domaine de composition.

Le terme "tiers polymère" tel qu'utilisé dans la présente invention désigne tout polymère susceptible d'être mélangé avec le TPU et le PEEA, soit tel quel soit avec un agent compatibilisant.

En tant que tiers polymère, on peut utiliser par exemple des polyoléfines, telles que des polyoléfines fonction-nalisées, par greffage ou copolymérisation. Des exemples de tiers polymères sont le PE, les copolymères de l'éthylène, ces polymères pouvant être greffés ou copolymérisés avec divers monomères tels que anhydride maléique ou méthacrylate de glycidyle.

Le matériau selon l'invention peut aussi être mélangé à des additifs classiques.

Les films obtenus à partir du matériau selon l'invention sont imperrespirants, c'est-à-dire perméables à la vapeur d'eau mais imperméables à l'eau, et de façon générale perméables aux gaz mais imperméables aux liquides. Ces films peuvent être préparés selon tout procédé connu dans l'art, par exemple par extrusion. Ces films présentent une épaisseur comprise par exemple entre 5 et 500 µm, de préférence entre 10 et 250 µm, Ces films peuvent être associés à d'autres films et/ou supports.

Les objets sont définis comme "antistatiques" car ils possèdent des caractéristiques d'antistaticité, à savoir leur résistivité surfacique est comprise par exemple entre 10⁹ et 10¹¹ ohms/carré. Ces objets peuvent être préparés selon tout procédé connu dans l'art, par exemple extrusion, injection, moulage, etc.

Les exemples suivants illustrent l'invention sans la limiter.

### Exemples.

Dans les exemples, on mesure la perméabilité à la vapeur d'eau à 23°C avec une humidité relative RH de 85%, conformément à la norme DIN 53122. La perméabilité est exprimée en gramme par m2 et par jour (g/m2/j).

### Exemples 1 à 3.

Dans ces exemples, on utilise un polyesteruréthanne (PU-ester), disponible chez BASF, sous la référence Elastollan® C85, On utilise aussi un polymère polyétheresteramide (PEEA) de dureté shore D 40, à blocs PA12 et PEG, présents selon un ratio en poids de 50/50, et présentant des poids moléculaires moyens respectivement de Mn=1500 et Mn=1500.

Le polyesteruréthanne et le polyétheresteramide sont mélangés par compoundage puis mis en forme de films par procédé cast. Les ratios sont exprimés en masse.

Les résultats sont reportés dans le tableau 1 ci-après.

**Tableau 1.**

| composition | perméabilité (g/m2/j) | épaisseur |
|---|---|---|
| PU-ester 100% | 112 | 105 |
| PU-ester 100% | 90 | 126 |
| PU-ester/PEEA 85/15 | 190-200 | 110 |
| PU-ester/PEEA 70/30 | 260 | 110 |
| PEEA 100% | 3000 | 50 |

### Exemples 4 à 6.

Dans ces exemples, on procède comme dans les exemples 1 à 3, à l'exception du fait que l'on utilise un polyétheruréthanne (PU-éther), disponible chez BASF, sous la référence Elastollan® 1185.

Les résultats sont reportés dans le tableau 2 ci-après.

**Tableau 2**

| composition | perméabilité (g/m2/j) | épaisseur (µm) |
|---|---|---|
| PU-éther 100% | 120 | 109 |
| PU-éther/PEEA 85/15 | 174 | 109 |
| PU-éther/PEEA 70/30 | 290 | 100 |

Les résultats montrent donc qu'avec une quantité minime de polymère à blocs PA12 et blocs PEG et une majorité de polyuréthanne, il est possible d'obtenir un film imperrespirant.

Bien entendu, la présente invention n'est pas limitée aux modes de réalisation indiqués, mais est susceptible de nombreuses variantes aisément accessibles à l'homme de l'art.

## Revendications

1. Film imperrespirant obtenu à partir d'un matériau comprenant, en poids, sur la base du poids du matériau : (a) de 50 à 95 % d'un polyuréthanne thermoplastique; et (b) de 5 à 50% d'un polymère à blocs polyamide PA11, PA12 ou PA11,12 et blocs polyéther PE.

2. Objet antistatique obtenu à partir d'un matériau comprenant, en poids, sur la base du poids du matériau : (a) de 50 à 95 % d'un polyuréthanne thermoplastique; et (b) de 5 à 50% d'un polymère à blocs polyamide PA11, PA12 ou PA11,12 et blocs polyéther PE.

3. Film imperrespirant ou objet antistatique selon la revendication 1 ou 2, respectivement, dans lequel dans le polymère (b), les blocs polyéther PE sont des blocs PEG.

4. Film imperrespirant ou objet antistatique selon la revendication 1 ou 2, respectivement, dans lequel dans le polymère (b), les blocs polyéther PE sont des blocs PTMG.

5. Film imperrespirant ou objet antistatique selon la revendication 1 ou 2, respectivement, ou selon la revendication 3 ou 4, dans lequel le polyuréthanne thermoplastiques est un polyétheruréthanne.

6. Film imperrespirant ou objet antistatique selon la revendication 1 ou 2, respectivement, ou selon la revendication 3 ou 4, dans lequel le polyuréthanne thermoplastique est un polyesteruréthanne.

7. Film imperrespirant ou objet antistatique selon la revendication 1 ou 2, respectivement, ou selon l'une quelconque des revendications 3 à 6, dans lequel dans le polymère (b), les blocs polyamide sont des blocs PA12.

8. Film imperrespirant ou objet antistatique selon la revendication 1 ou 2, respectivement, ou selon l'une quelconque des revendications 3 à 7, comprenant, en poids, sur la base du poids du matériau :
(a) de 90 à 65% d'un polyuréthanne thermoplastique; et
(b) de 10 à 35% d'un polymère à blocs polyamide PA11, PA12 ou PA11,12 et blocs polyéther PE.

9. Film imperrespirant ou objet antistatique selon la revendication 1 ou 2, respectivement, ou selon l'une quelconque des revendications 3 à 8, dans lequel le matériau est associé avec un tiers polymère, jusqu'à 100%, de préférence jusque 50%, dudit tiers polymère, exprimé en en poids sur la base du poids du matériau.

10. Utilisation pour la fabrication de film imperrespirant d'un matériau comprenant, en poids, sur la base du poids du matériau :
(a) de 50 à 95 % d'un polyuréthanne thermoplastique; et
(b) de 5 à 50% d'un polymère à blocs polyamide PA11, PA12 ou PA11,12 et blocs polyéther PE.

11. Utilisation pour la fabrication d'objet antistatique d'un matériau comprenant, en poids, sur la base du poids du matériau :
(a) de 50 à 95 % d'un polyuréthanne thermoplastique; et
(b) de 5 à 50% d'un polymère à blocs polyamide PA11, PA12 ou PA11,12 et blocs polyéther PE.
